Europäisches Patentamt

**European Patent Office**

**Office européen des brevets**

(19)

(11) Numéro de publication: **0 251 936**
**A1**

(12)

# DEMANDE DE BREVET EUROPEEN

(21) Numéro de dépôt: **87401558.9**

(22) Date de dépôt: **02.07.87**

(51) Int. Cl.³: **F 26 B 1/00**
**F 26 B 7/00, A 23 K 3/02**

(30) Priorité: **04.07.86 FR 8609792**

(43) Date de publication de la demande:
**07.01.88 Bulletin 88/1**

(84) Etats contractants désignés:
**AT BE CH DE ES GB GR IT LI LU NL SE**

(71) Demandeur: **FRANCE LUZERNE**
**Complexe agricole du Mont-Bernard Route de Suippes**
**F-51008 Chalons sur Marne Cédex(FR)**

(72) Inventeur: **de Mathan, Olivier**
**Boisgibault Ardon**
**F-45160 Olivet(FR)**

(74) Mandataire: **Phélip, Bruno et al,**
**c/o Cabinet Harlé & Phélip 21, rue de la Rochefoucauld**
**F-75009 Paris(FR)**

(54) **Procédé pour le séchage de matières végétales avec de la vapeur haute pression.**

(57) On sèche des matières végétales telles que la luzerne (1); celle-ci est chauffée (2) puis pressée (4). Le jus (7) est traité dans un évaporateur (11) utilisant comme fluide de chauffage de la vapeur basse pression (17, 18) provenant d'un éjecto-compresseur (16) alimenté par de la vapeur haute pression (14) provenant, par exemple, d'une centrale nucléaire (13). On utilise aussi de la vapeur basse pression (19) prelevée à la sortie de l'éjecto-compresseur (16) pour réchauffer la luzerne en (2). L'effluent (22) sortant de l'évaporateur (11) est introduit avec le reste (15) de la vapeur haute pression dans une unité de séchage (12) dans laquelle de l'air ambiant (28) est préchauffé. L'air chaud (30) est utilisé pour sécher la matière pressée humide (10).

FIG.1

EP 0 251 936 A1

1

L'invention appartient au domaine du séchage (ou déshydratation )des matières végétales. Elle a pour objet un procédé de séchage à rendement énergétique élevé, qui utilise la vapeur haute pression.

Les procédés traditionnels de déshydratation des fourrages utilisent l'échange direct de chaleur entre la matière humide et un courant de gaz chaud dans un sécheur tambour rotatif, par exemple à co-courant. Le rendement thermique est d'autant plus élevé que la température de ces gaz est elle-même plus élevée .

Ces gaz chauds résultent le plus souvent de la dilution de gaz de combustion obtenus à partir de fioul, charbon, gaz naturel, biogaz ou paille, soit encore d'air chauffé sur batterie électrique. Selon la température,le rendement énergétique varie entre 750 et 800 Kcal par kg d'eau évaporée.

Des procédés fondés sur la valorisation de l'énergie des gaz issus du sécheur rotatif peuvent améliorer ces performances.

On met alors en oeuvre, soit un sécheur à tapis, alimenté en air chaud, produit sur un aérocondenseur placé en aval du sécheur rotatif, soit, lorsque l'on dispose d'un liquide à concentrer, un évaporateur sous vide à multiple effet.

La consommation spécifique peut alors descendre jusqu'à 450 Kcal/kg d'eau évaporée.

Le séchage utilisant la vapeur tel qu'il est appliqué à d'autres matières, n'est pas pratiqué en déshydratation en raison de son coût énergétique.

Aux températures permises usuellement par la vapeur, la consommation calorifique du sécheur proprement dit ne peut descendre en dessous de 900 Kcal par kilo d'eau évaporée . Mais on doit encore ajouter 15% à ce chiffre pour exprimer la consommation par rapport à l'énergie pri-

2

maire dépensée à la chaudière de vaporisation,sans préjudice des autres éléments du coût de production de vapeur.

Le procédé selon l'invention procure une amélioration importante du rendement calorifique à partir de la vapeur . Il s'adapte particulièrement bien aux cas où la vapeur est un sous-produit ou un produit non utilisé à certaines périodes. Des exemples peuvent en être la vapeur d'origine géothermique, ou celle des centrales de chauffage urbain par chaudière à incinération d'ordures, ou encore de la production électro-nucléaire en période d'été.

Sous sa forme générale, l'invention a pour objet un procédé pour le séchage de matières végétales,dans lequel on soumet la matière végétale à traiter à un chauffage, suivi d'un pressage, qui fournit un liquide de pressage et une matière pressée humide,lesquels sont tous deux séchés, ledit procédé étant caractérisé en ce qu'on utilise de la vapeur haute pression comme fluide disponible,

a)en introduisant une première quantité de ladite vapeur disponible dans un étage d'évaporation destiné à sécher le liquide de pressage, cette première quantité de vapeur étant introduite dans l'étage d'évaporation après passage dans un éjecto-compresseur, l'effluent gazeux provenant de l'étage d'évaporation étant partiellement recyclée vers ledit éjecto-compresseur,

b)en introduisant une partie de la vapeur basse pression sortant dudit éjecto-compresseur dans l'étage de chauffage avant pressage de la matière végétale,

c)en utilisant dans une unité de séchage de ladite matière pressée humide le reste de ladite vapeur disponible et le reste de l'effluent gazeux de l'évaporateur.

Dans ce mode de réalisation du procédé de l'invention, on peut utiliser un évaporateur ou concentrateur à simple effet (ou à un seul corps)de conception traditionnelle et fonctionnant notamment sous vide.

Selon une variante de réalisation, l'invention a pour objet un procédé du genre ci-dessus, caractérisé en ce qu'on utilise de la vapeur haute pression comme fluide disponible ,

a)en introduisant une première quantité de ladite vapeur disponible dans un étage d'évaporation destiné à sécher le liquide de pressage, cette première quantité de vapeur étant introduite dans l'étage d'évaporation après passage dans un premier éjecto-compresseur, l'effluent gazeux provenant de l'étage d'évaporation étant partiellement recyclé vers ledit premier éjecto-compresseur,

b)en introduisant une seconde quantité de ladite vapeur disponible après passage dans un second éjecto-compresseur, dans l'étage de chauffage avant pressage de la matière végétale, l'effluent gazeux provenant de l'étage d'évaporation étant partiellement recyclé vers ledit second éjecto-compresseur ,

c)en utilisant dans une unité de séchage de ladite matière pressée humide le reste de ladite vapeur disponible et le reste de l'effluent gazeux de l'évaporateur.

Dans la variante de réalisation qui vient d'être mentionnée, on utilise un évaporateur, ou concentrateur, à double effet fonctionnant notamment sous vide.

Selon une autre variante de réalisation, l'invention a pour objet un procédé du genre ci-dessus, caractérisé en ce qu'on utilise de la vapeur haute pression comme fluide disponible,

a)en introduisant une première quantité de ladite vapeur disponible dans un étage d'évaporation destiné à sécher le liquide de pressage, cette première quantité de vapeur étant introduite dans l'étage d'évaporation après passage dans un premier éjecto-compresseur, l'effluent gazeux provenant de l'étage d'évaporation étant partiellement recyclé vers ledit premier éjecto-compresseur,

b/ en introduisant une seconde quantité de ladite vapeur disponible, après passage dans un second éjecto-compresseur, dans l'étage de chauffage avant pressage de la matière végétale, l'effluent gazeux provenant de l'étage d'évaporation étant partiellement recyclé vers ledit second éjecto-compresseur,

c/ en introduisant une troisième quantité de ladite vapeur disponible avec le reste de l'effluent gazeux de l'étage d'évaporation, dans un troisième éjecto-compresseur, la vapeur sortant de ce dernier étant utilisée, avec le reste de ladite vapeur disponible, dans une unité de séchage de la matière pressée humide.

Dans la variante de réalisation qui vient d'être mentionnée, on utilise un évaporateur ou concentrateur à triple effet fonctionnant notamment sous vide.

La caractéristique essentielle du procédé de l'invention consiste à réaliser l'opération de séchage à partir de vapeur haute pression disponible, en utilisant au moins un éjecto-compresseur en un point essentiel du système et en combinant des opérations élémentaires de séchage pour permettre les récupération d'énergie.

Le procédé de l'invention est applicable à des matières végétales très diverses. Au sens de la présente description, l'expression "matières végétales" désigne des plantes ou des parties de plantes, surtout les parties aériennes de celles-ci, telles que les feuilles et les tiges non lignifiées. Le procédé est applicable avec avantage à des végétaux feuillus, tout spécialement aux fourrages, comme la luzerne.

Dans l'art antérieur, on a déjà proposé de réchauffer certains fourrages, tels que la luzerne, avant leur pressage, en injectant directement de la vapeur dans la masse de la matière. Ce procédé présente l'inconvénient d'introduire des quantités d'eau supplémentaires dans le fourrage à déshydrater, ce qui augmente le coût énergétique du séchage. On sait, néanmoins, qu'un réchauffage de la matière, par exemple à une température de l'ordre de 80 à 85°C, avant le pressage, exerce un effet bénéfique sur le rendement de pressage et permet d'obtenir un liquide de pressage (ou jus) plus clair. Après chauffage à une telle température, en effet, la fraction de protéine liée aux pigments chloroplastiques est thermocoagulée dans le tissus fibreux et le jus est débarrassé d'une matière solide qui risquerait d'encrasser les parois chaudes utilisées dans l'installation de séchage. L'assouplissement des tissus par la température et l'abaissement de la viscosité du liquide, facilitent grandement son expression.

L'invention tire profit de cette technique connue du pré-chauffage avant pressage, mais l'intègre dans un procédé qui, d'une part utilise de la vapeur haute pression disponible et, d'autre part, procure un rendement énergétique élevé, très largement supérieur à celui des procédés connus.

Au sens de la présente description, on appelle "vapeur haute pression" ou "vapeur vive" la vapeur d'eau qui est disponible sous une pression au moins égale à $5.10^5$ Pa et pouvant atteindre une valeur jusqu'à $18.10^5$ Pa, la gamme préférée se situant entre $10.10^5$ et $15.10^5$ Pa. Ainsi qu'on l'a dit précédemment, des exemples de vapeur répondant aux besoins de l'invention sont la vapeur d'origine géothermique ou celle provenant des centrales de chauffage urbain par chaudières à incinération d'ordures, ou celle de la production électro-nucléaire. Il est bien connu, notamment, que les centrales électro-nucléaires fournissent, en période d'été, des quantités importantes de vapeur d'eau, qui sont gaspillées.

Le procédé combine énergétiquement, en vue d'un rendement optimal, les trois opérations de

- pressage à chaud
- séchage du liquide de pressage
- séchage de la matière pressée humide.

L'invention prévoit d'introduire une partie de la vapeur haute pression disponible, en la faisant passer au préalable à travers un éjecto-compresseur. Ce type d'appareil est connu de l'homme du métier. Il constitue une tuyère statique, avec effet venturi, qui permet d'abaisser la température de la vapeur introduite. Egalement, la mise en oeuvre d'un tel éjecto-compresseur permet de régler la pression de vapeur à la valeur la plus appropriée pour l'opération consécutive. A titre d'exemple, la valeur convenable se situe aux environs de 12 bars. L'utilisation d'éjecto-compresseurs est très avantageuse, car ce type de matériel est d'une grande fiabilité et d'un coût modéré, puisqu'il ne comporte aucune pièce en mouvement.

Dans la technique, l'expression "thermo-compresseur" est utilisée d'une manière synonyme à l'expression "éjecto-compresseur". Il s'agit, comme on l'a dit ci-dessus, d'appareils statiques dans lesquels la vapeur d'eau sous pression est détendue, l'énergie de pression étant alors transformée en vitesse. Dans la présente description on utilisera de préférence l'expression "éjecto-compresseur".

En vue de la concentration du liquide de pressage on utilise une première quantité de vapeur disponible pour l'introduire, après passage dans un premier éjecto-compresseur, dans un étage d'évaporation.

Dans la forme de réalisation du procédé qui comporte un évaporateur à un seul corps, il est approprié de mettre en oeuvre un seul éjecto-compresseur situé en amont du premier corps.

Dans la variante comportant un étage d'évaporation à multiple effet, le nombre d'effets, ou de corps, est choisi en fonction de la quantité de vapeur disponible. En pratique, on utilise un équipement d'évaporation classique sous vide, comportant au moins deux ou trois effets.

Selon une autre caractéristique de l'invention, une partie de l'effluent gazeux provenant de l'étage d'évaporation, avantageusement celle qui provient du premier, ou de l'unique, effet de l'évaporateur, est recyclée en amont du premier éjecto-compresseur, pour être mélangée avec la première quantité de vapeur disponible.

Dans la réalisation comportant un évaporateur à simple effet, une partie de la vapeur basse pression sortant du premier éjecto-compresseur est utilisée pour le réchauffage de la matière végétale avant pressage.

Dans la réalisation comportant un évaporateur à multiple effet, on introduit une seconde quantité de vapeur disponible, après l'avoir fait passer dans un second éjecto-compresseur, en vue de réchauffer la matière végétale avant pressage.

Cette opération peut être réalisée dans un appareil dénommé blancheur, c'est-à-dire une enceinte dans laquelle la vapeur est injectée dans la masse de matière végétale. Une presse conventionnelle, par exemple une presse à vis, reprend la matière préchauffée pour en extraire le jus et fournir une matière pressée humide. Un tamis peut éventuellement être prévu pour arrêter les particules solides que pourrait entraîner le jus.

Selon une autre caractéristique de l'invention, une partie de l'effluent gazeux provenant de l'étage d'évaporation, de préférence l'effluent provenant du second effet de l'évaporateur, est recyclée vers le second éjecto-compresseur , de manière à être mélangée à la seconde quantité de vapeur pour être utilisée dans le réchauffage de la matière végétale traitée.

Selon l'invention, on utilise encore la vapeur disponible dans l'unité de séchage de la matière pressée humide.

Dans le mode de réalisation comportant un évaporateur à simple effet, le reste de la vapeur sortant de cet évaporateur est utilisé conjointement avec le reste de la vapeur disponible, pour réaliser le séchage de la matière pressée humide.

Dans la réalisation comportant un évaporateur à multiple effet, on combine une troisième quantité de vapeur disponible avec le reste de l'effluent gazeux de l'étage d'évaporation, de préférence celui qui sort du troisième effet de l'évaporateur, si ce dernier comporte trois effets, pour introduire ces flux combinés dans un troisième éjecto-compresseur. La vapeur sortant de ce dernier est alors mise à profit avec le reste de la vapeur disponible, pour le séchage de la matière pressée humide.

Dans la pratique, il est avantageux d'utiliser un sécheur à tapis sur lequel circule la matière à sécher, le fluide de séchage étant de l'air. L'air est préchauffé par contact avec la vapeur, dans les conditions précitées, dans des appareils classiques du type aérotherme. En principe, il suffit d'utiliser un seul aérotherme. Cependant, pour obtenir le meilleur rendement énergétique, on préfère utiliser plusieurs aérothermes en série.

Selon une caractéristique complémentaire intéressante, l'air de l'unité de séchage est préchauffé additionnellement par introduction, dans les aérothermes, des condensats provenant de l'étage d'évaporation. Ainsi, les condensats provenant des différents corps (ou effets) du concentrateur (ou évaporateur) peuvent être combinés en un flux commun, afin de préchauffer l'air de séchage et d'améliorer encore le rendement.

On peut noter aussi que, dans certains cas, il peut être judicieux de prélever une partie desdits condensats pour les utiliser au niveau du ou des éjecto-compresseurs, afin de réaliser une désurchauffe des fluides gazeux circulant dans ces appareils.

L'invention sera encore illustrée par la description qui suit, faite en référence aux dessins annexés sur lesquels:

Fig. 1 est un diagramme de fonctionnement du procédé, dans lequel on met en oeuvre un évaporateur à simple effet,

Fig. 2 est un diagramme de fonctionnement d'une variante de procédé, dans laquelle on utilise un évaporateur à double effet,

Fig. 3 est un diagramme de fonctionnement d'une variante du procédé, dans laquelle on utilise un évaporateur à triple effet.

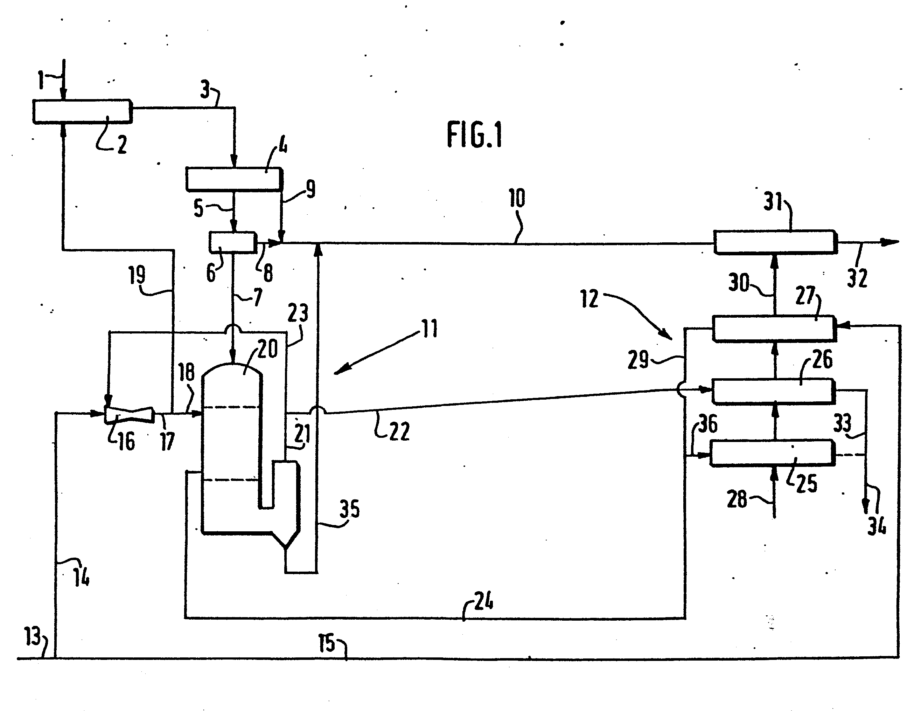

Ainsi qu'on le voit à la Fig. 1, la matière végétale brute à traiter arrive en (1) dans une enceinte ou blancheur (2) où elle est réchauffée de la manière décrite ci-après. On a représenté en (3) le trajet d'alimentation de la matière végétale réchauffée jusqu'à la presse (4). Celle-ci peut être avantageusement une presse à vis. Le pressage fournit, d'une part un jus (5) et, d'autre part, une matière fibreuse humide (9). Un tamis (6) est intercalé sur le trajet du jus (5) pour arrêter les particules solides éventuellement entraînées. La matière solide retenue par le tamis est ajoutée en (8) à la matière fibreuse humide (9) pour constituer la masse (10) de matière végétale pressée, qui sera ultérieurement soumise au séchage dans une unité désignée par la référence générale (12), de la manière décrite ci-après.

Après son passage à travers le tamis (6), le jus clarifié est acheminé par la ligne (7) jusqu'à un évaporateur désigné par la référence générale (11). On dispose par ailleurs en (13) de vapeur haute pression. L'arrivée principale (13) est d'abord séparée en deux courants (14,15). Le courant (15) est utilisé dans l'unité de séchage (12) comme il sera décrit plus loin.

Le courant (14) est mis en oeuvre dans l'évaporateur (11) en étant introduit dans un éjecto-compresseur (16). Il en sort une vapeur à température et pression réduites sous forme d'un courant (17). Celui-ci est divisé en deux courants (18,19). Le courant de vapeur (19) sert à l'alimentation du blancheur (2). La vapeur du courant (18) est utilisée dans l'évaporateur (11) qui, dans l'exemple de réalisation présenté à la Fig. 1, comporte un seul corps (20). Il sort du corps (20) de l'évaporateur (11) un courant gazeux (21) essentiellement constitué de vapeur basse pression, qui est subdivisé en deux courants (22,23). Le courant (22) est introduit dans l'unité de séchage (12), comme il sera décrit plus loin. Le courant (23) est recyclé en amont de l'éjecto-compresseur (16) pour être mélangé au courant (14) de vapeur vive. Il sort également du corps (20) d'évaporateur (11) un jus concentré ou sérum dans la canalisation (35), qui peut être introduit dans le parcours (10) de la matière fibreuse humide, pour être séché conjointement à celle-ci dans l'unité de séchage (12). Enfin, on recueille dans la ligne (24) des condensats chauds qui peuvent aussi être mis à profit dans l'unité de séchage (12).

Dans l'exemple illustratif représenté à la Fig.1, cette unité de séchage (12) comporte trois aérothermes (25,26, 27). L'air à température ambiante est introduit en (28) dans le premier aérotherme (25). L'air entrant est préchauffé par le condensat chaud (24) provenant de l'évaporateur (11), qui se joint au courant liquide chaud (29) provenant des condensations de l'aérotherme (27). Les courants conjugués (24, 29) sont réunis dans la canalisation (36) pour être introduits dans l'aérotherme (25). Le deuxième aérotherme (26) est réchauffé par le courant de vapeur (22) provenant de l'évaporateur (11). Le troisième aérotherme (27) est alimenté par la vapeur vive circulant dans la ligne (15). On dispose ainsi dans la ligne (30) d'air chaud, capable d'être introduit dans un sécheur (31), par exemple un sécheur à tapis, dans lequel la matière fibreuse humide (10) est séchée. La matière végétale séchée sort du procédé en (32) et peut être soumise à d'autres opérations (non représentées), par exemple de broyage et de granulation. Par ailleurs, à la sortie de l'aérotherme (26) on dispose en (33) de condensats refroidis qui se joignent à ceux provenant de l'aérotherme (25) pour fournir un courant (34).

Le procédé qui vient d'être décrit, schématiquement représenté au dessin de la Fig. 1, a été mis en oeuvre pour la déshydration de luzerne fraiche ayant une teneur en humidité de 82 %. On disposait d'une vapeur sèche à $18.10^5$ Pa provenant d'une centrale électro-nucléaire.

On a traité un tonnage de luzerne de 64 tonnes qui a été introduit en (1) dans le procédé. Les essais ont montré qu'il fallait utiliser 35 tonnes de vapeur à 206° sous $18.10^5$ Pa, pour amener à 15 % la teneur en humidité de la luzerne.

Dans l'évaporateur (11), on a eu besoin de 25,35 tonnes de vapeur vive provenant du courant (14). Le reste de la vapeur disponible, soit 9,65 tonnes, a été mis en circulation dans la ligne 15, pour alimenter l'unité de séchage (12).

L'éjecto-compresseur (16) a été alimenté, d'une part à l'aide des 25,35 tonnes de vapeur vive circulant dans la ligne (14) et, d'autre part, à l'aide de 25,35 tonnes de vapeur recyclée dans la ligne (23), cette dernière se trouvant à une température voisine de 90°. A la sortie de l'éjecto-compresseur (16) on dispose, dans la ligne (19) de 8 tonnes de vapeur basse pression à une température d'environ 104°C, qui sont utilisées dans le blancheur (2). Dans la ligne (18), qui alimente en vapeur le corps (20) d'évaporateur (11), on dispose de 42,7 tonnes de vapeur à une température d'environ 104°C.

La quantité de vapeur évaporée dans le corps (20) est de 43,1 tonnes. On peut ainsi disposer des 25,35 tonnes précitées du courant (23) et de 17,75 tonnes dans la ligne (22) d'une vapeur à environ 90°C pour l'alimentation de l'aérotherme (26).

On a traité un tonnage de luzerne de 64 tonnes, qui a été introduit en (1) dans le procédé.

A la sortie du tamis (6) on a obtenu dans la ligne (7) 49 tonnes de jus liquide. Aux 23 tonnes de matière fibreuse humide s'ajoutent 5,9 tonnes de sérum concentré provenant de la ligne (35), ce qui constitue au total 28,9 tonnes de produit soumis au séchage dans l'unité (12), plus particulièrement dans le sécheur tapis (31).

L'évaporateur (11) fournit encore 41 tonnes de condensats chauds, à une température voisine de 80°C, qui sont disponibles dans la ligne (24).

Dans l'unité de séchage (12), on introduit par la ligne (28) 800.000 kgs d'air à 15°, qui sont préchauffés dans l'aérotherme (25). Celui-ci reçoit, en effet, un flux liquide chaud dans la ligne (36) en une quantité égale à 50,6 tonnes, représentant la somme des 41 tonnes circulant dans la ligne (24) et de 9,60 tonnes de condensats circulant dans la ligne (29) et provenant de l'aérotherme (27). L'air sortant du premier aérotherme (25) se trouve à une température voisine de 26°. L'air sortant du deuxième aérotherme (26) est porté à une température de l'ordre de 80°. L'air sortant dans la ligne (30) de la batterie d'aérothermes se trouve à une température d'environ 110° lorsqu'il est introduit sur le sécheur (31). Dans ce sécheur, on évapore 15,35 tonnes d'eau pour obtenir, à la sortie du procédé dans la ligne (32), 13,55 tonnes de luzerne séchée qui peut être convertie ultérieurement de manière classique par broyage et granulation.

Il sort du premier aérotherme (25) un condensat refroidi à 40° qui est disponible dans la ligne (34).

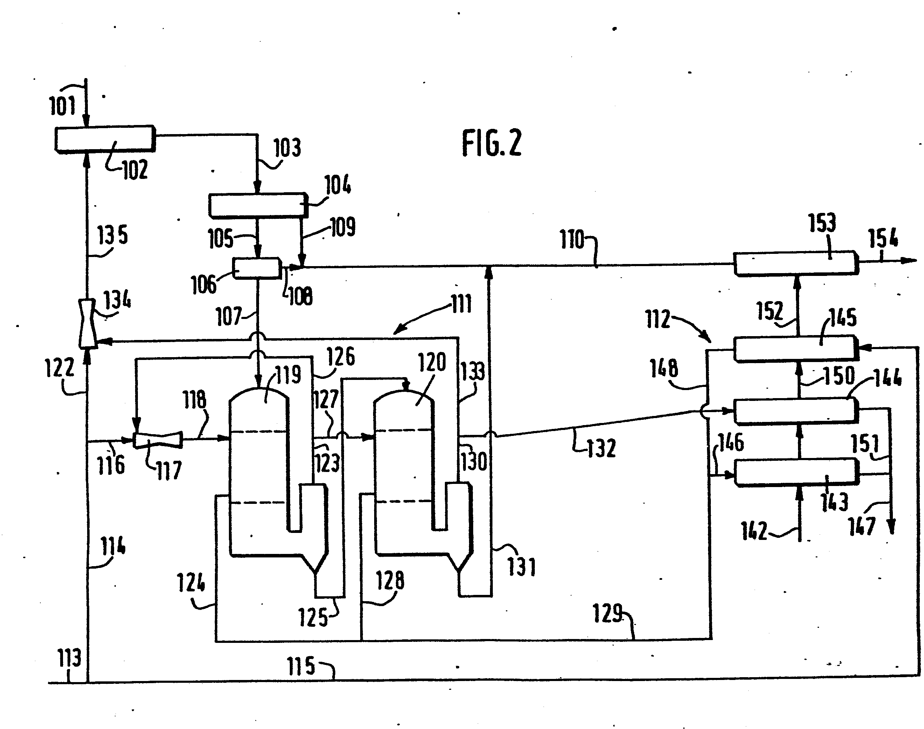

Dans la variante représentée à la Fig. 2, la matière végétale brute à traiter arrive en (101) dans une enceinte ou blancheur (102) où elle est réchauffée de la manière décrite ci-après. On a représenté en (103) le trajet d'alimentation de la matière végétale réchauffée jusqu'à la presse (104). Celle-ci peut être avantageusement une presse à vis. Le pressage fournit d'une part, un jus (105) et d'autre part, une matière fibreuse humide (109). Un tamis (106) est intercalé sur le trajet du jus (105) pour arrêter les particules solides éventuellement entraînées. La matière solide retenue par le tamis est ajoutée en (108) à la matière fibreuse humide (109) pour constituer la masse (110) de matière végétale pressée qui sera ultérieurement soumise au séchage dans une unité désignée par la référence générale (112), de la manière décrite ci-après.

Après son passage à travers le tamis (106) le jus clarifié est acheminé par la ligne (107) jusqu'à un évaporateur à multiple-effet, désigné par la référence générale (111). On dispose par ailleurs en (113) de vapeur haute pression. L'arrivée principale (113) est d'abord séparée en deux courants (114,115). Le courant (115) est utilisé dans l'unité de séchage (112) comme il sera décrit plus loin. Le courant (114) est lui-même divisé en deux courants (116,122), le courant (116) étant mis en oeuvre dans l'évaporateur (111) tandis que le courant (122) sert à alimenter le blancheur (102) ainsi qu'il sera expliqué ci-après.

La vapeur haute pression du courant (116)/est introduite dans un premier éjecto-compresseur (117). Il en sort une vapeur à température et pression réduites dans le courant (118), qui est introduit dans le corps (119) ou premier effet de l'évaporateur (111). La conception de l'évaporateur à multiple effet (111) est conventionnelle. L'évaporation est réalisée sous vide. Il sort du premier corps d'évaporateur (119) un effluent gazeux (123) essentiellement formé de vapeur, un courant (124) de condensat chaud, tandis que le liquide de pressage concentré sort par la canalisation (125) pour être introduit dans le deuxième corps (120). La vapeur sortante (123) est subdivisée en deux courants (126,127). Le courant (126) est recyclé en amont de l'éjecto-compresseur (117) pour être mélangé au courant de vapeur (116). Le courant (127) sert au chauffage du second corps d'évaporateur (120). Celui-ci fournit, d'une part un effluent gazeux (130) et, d'autre part, un jus concentré (131), lequel peut être introduit dans le parcours (110) de la matière fibreuse humide, pour être séché conjointement à celle-ci dans l'unité de séchage (112). L'effluent gazeux qui est essentiellement constitué de vapeur d'eau, est subdivisé en deux courants (132,133). Le courant (132) est utilisé dans l'unité de séchage (112) ainsi qu'il sera décrit plus loin. Le courant (133) est envoyé en amont d'un second éjecto-compresseur (134) pour être mélangé au courant de vapeur haute pression arrivant en (122). Il sort en (135) de l'éjecto-compresseur (134) une vapeur à température et pression abaissées, qui est introduite dans le blancheur (102) en vue du réchauffage de la matière végétale (101).

Par ailleurs, l'évaporateur (111) fournit dans le premier corps (119) des condensats chauds dans la ligne (124), tandis que le second corps (120) fournit des condensats chauds circulant dans la ligne (128) lesquels, réunis aux précédents, fournissent le courant (129) qui est mis à profit dans l'unité de séchage (112). On voit également au dessin que, compte tenu de la concentration à deux effets faisant l'objet de la réalisation de la Fig. 2, le jus (125) concentré dans le premier corps (119) est envoyé dans le deuxième corps (120).

L'unité de séchage représentée à la Fig. 2 et désignée par la référence générale (112), comprend trois aérothermes (143,144,145). L'air à température ambiante est introduit en (142) dans le premier aérotherme (143). L'air entrant est préchauffé par les condensats chauds introduits en (146) dans l'aérotherme (143). Ce courant (146) est formé en combinant le courant (129) précité et le courant (148) provenant de l'aérotherme (145). L'aérotherme (144) est alimenté par la vapeur de la ligne (132) provenant, en partie, de l'effluent du deuxième corps d'évaporateur (120). A la sortie de l'aérotherme (144) on dispose en (151) de condensats refroidis qui se joignent à ceux provenant de l'aérotherme (143) pour fournir un courant (147).

L'aérotherme (145) est alimenté par le reste de la vapeur haute pression disponible qui circule dans la ligne (115). On dispose ainsi en (152) d'air chaud, capable d'être introduit dans un sécheur (153), par exemple un sécheur à tapis, dans lequel la matière fibreuse humide (110) est séchée.

La matière végétale séchée sort du procédé en (154) et peut être soumise à d'autres opérations non représentées, par exemple de broyage et granulation.

Le procédé décrit en référence à la Fig. 2 a été mis en oeuvre pour la déshydratation de luzerne fraiche ayant une teneur en humidité de 82 %. On disposait d'une vapeur sèche à $18.10^5$Pa provenant d'une centrale électro-nucléaire.

On a traité un tonnage de luzerne de 51,5 tonnes qui a été introduit en (101) dans le procédé. Les essais ont montré qu'il fallait utiliser 28,7 tonnes de vapeur à 206° sous $18.10^5$Pa, pour amener à 15 % la teneur en humidité de la luzerne.

Dans l'évaporateur ou concentrateur (111) on a eu besoin de 11,5 tonnes de vapeur vive provenant du courant (116). La quantité de vapeur circulant dans le courant (122) était égale à 3,86 tonnes. Ce courant a été introduit en amont de l'éjecto-compresseur (134) en même temps que 2,58 tonnes de vapeur basse pression à 80°C environ circulant dans la ligne (133) et provenant du deuxième corps (120) d'évaporateur. On a ainsi disposé à la sortie de l'éjecto-compresseur (134) d'une quantité de vapeur basse pression de 6,44 tonnes à une température d'environ 102°C, qui a pu être acheminée par la ligne (135) vers le blancheur (102). A la sortie du tamis (106), on a obtenu dans la ligne (107) 39,45 tonnes de jus liquide. On obtient 18,49 tonnes de matière fibreuse humide auxquelles s'ajoutent 4,75 tonnes de sérum concentré provenant de la ligne (131), ce qui constitue au total 23,24 tonnes de produit soumis au séchage dans l'unité (112), plus particulièrement dans le sécheur à tapis (153).

Les besoins calorifiques de l'évaporateur (111) sont satisfaits par les 23 tonnes de vapeur à 104° circulant dans la ligne (118) et provenant de l'éjecto-compresseur (117). Ce dernier reçoit, comme décrit précédemment, 11,5 tonnes de vapeur vive par la ligne (116) et un complément de 11,5 tonnes de vapeur basse pression à 90°, recyclé dans la ligne (126) en provenance du premier corps (119) d'évaporateur.

Dans le premier corps (119) d'évaporateur, une quantité d'eau de 23,2 tonnes est évaporée. L'effluent sort par la ligne (123) et fournit d'une part les 11,5 tonnes de la ligne (126) qui sont recyclées à l'éjecto-compresseur (117) et, d'autre part, les 11,7 tonnes de vapeur de la ligne (127) qui servent à alimenter le deuxième corps d'évaporateur (120).

Dans le deuxième corps d'évaporateur (120), une quantité d'eau de 11,5 tonnes est évaporée. L'effluent sort par la ligne (130) pour fournir 8,3 tonnes dans le courant (132) pour alimentation de l'unité de séchage (112) et 2,58 tonnes dans la ligne (111) pour introduction dans le deuxième éjecto-compresseur (134).

L'évaporateur (111) fournit encore 33 tonnes de condensats chauds à une température voisine de 80°C qui sont disponibles dans la ligne (129).

Dans l'unité de séchage (112) on introduit par la ligne (142) 640.000 kgs d'air à 15°, qui sont préchauffés dans l'aérotherme (143) par 55,8 tonnes de condensats introduits par la ligne (146). Il sort du premier aérotherme (143) un condensat refroidi à 40° qui est disponible dans la ligne (147). L'air préchauffé dans l'aérotherme (143) jusqu' à une température voisine de 27°C, est introduit dans l'aérotherme (144). Ce dernier reçoit comme fluide calorifique 8,3 tonnes de vapeur basse pression circulant dans la ligne (132). L'air qui entre dans l'aérotherme (144) à une température voisine de 27° en ressort à une température de l'ordre de 50° pour être introduit dans le troisième aérotherme (145). Celui-ci reçoit 13,33 tonnes de vapeur vive disponibles dans la ligne (115). L'air chaud sort à 110° dans la ligne (152) pour être introduit dans le sécheur à tapis (153) dans lequel 12,33 tonnes d'eau sont évaporées.

On obtient à la sortie du procédé dans la ligne (154) 10,91 tonnes de luzerne séchée, qui peut être ultérieurement convertie de manière classique, par broyage et granulation.

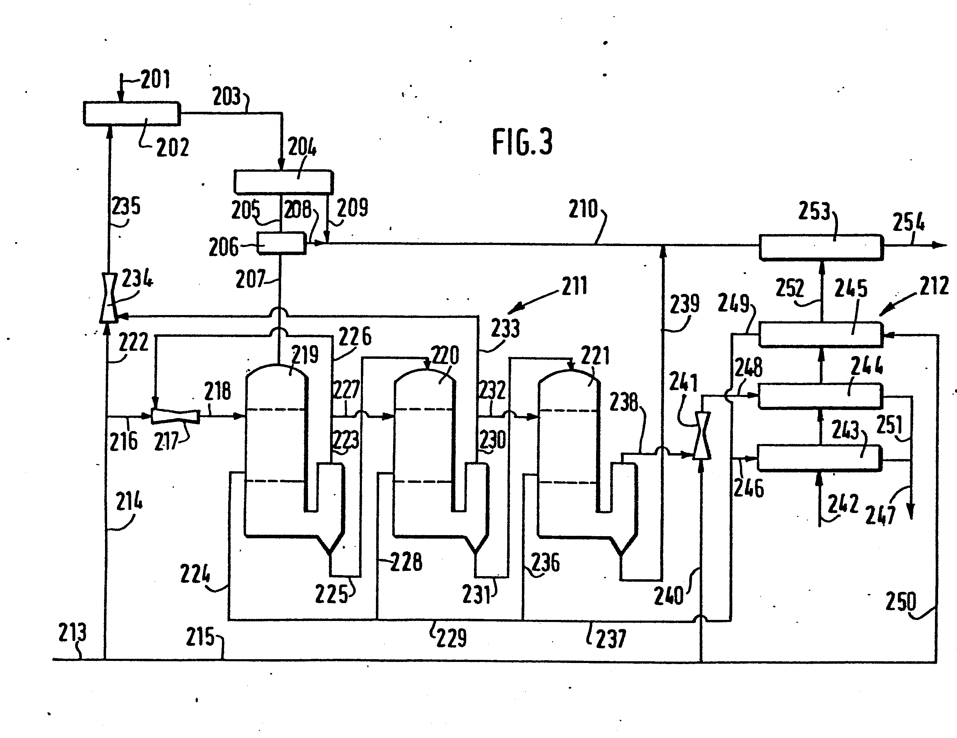

La Fig. 3 représente le diagramme de fonctionnement du procédé , dans lequel on utilise un évaporateur à triple effet. La matière végétale brute à traiter arrive en (201) dans le blancheur (202) où elle est réchauffée de la manière décrite ci-après. On a représenté en (203) le trajet d'alimentation de la matière végétale réchauffée jusqu'à la presse (204), par exemple une presse à vis. Le pressage fournit d'une part un jus (205) et, d'autre part, une matière fibreuse humide (209). Un tamis (206) est intercalé sur le trajet du jus (205) pour arrêter les particules solides éventuellement entraînées. La matière solide retenue par le tamis (206) est ajoutée en (208) à la matière fibreuse humide (209) pour constituer la masse (210) de matière végétale pressée, qui sera ultérieurement soumise au séchage dans une unité (212) de la manière décrite ci-après.

Après son passage à travers le tamis (206), le jus clarifié est acheminé par la ligne (207) jusqu'à l'évaporateur (211) qui, dans ce cas, est un évaporateur à trois effets. On dispose par ailleurs en (213) de vapeur haute pression. L'arrivée principale (213) est d'abord séparée en deux courants (214,215). Le courant (215) est utilisé dans l'unité de séchage (212) comme il sera décrit plus loin.

Le courant (214) est lui-même divisé en deux courants (216,222), le courant (216) étant mis en oeuvre dans l'évaporateur (211) tandis que le courant (222) sert à alimenter le blancheur (202), ainsi qu'il sera expliqué ci-après.

La vapeur haute pression du courant (216) est introduite dans un premier éjecto -compresseur (217). Il en sort une vapeur à température et pression réduites dans le courant (218), laquelle est introduite dans le corps (219) où premier effet de l'évaporateur (211). La conception de l'évaporateur à multiple effet (211) est conventionnelle. L'évaporation est réalisée sous vide. Il sort du premier corps d'évaporateur (219) un effluent gazeux (223) essentiellement formé de vapeur, un courant (224) de condensat chaud tandis que le liquide de pressage sort par la canalisation (225) pour être introduit dans le deuxième corps (220). La vapeur sortant en (223) est subdivisée en deux courants (226,227). Le courant (226) est recyclé en amont de l'éjecto-compresseur (217) pour être mélangé au courant de vapeur (216). Le courant (227) sert au chauffage du second corps d'évaporateur (220). Les condensats chauds de la canalisation (224) rejoignent le courant (228) de condensat sortant du deuxième corps d'évaporateur (220). Celui-ci fournit d'une part un effluent gazeux (230) et, d'autre part, un jus concentré (231) lequel est introduit dans le troisième corps d'évaporateur (221). L'effluent gazeux, qui est essentiellement constitué de vapeur d'eau, est subdivisé en deux courants (232,233). Le courant (232) est utilisé pour le réchauffage du troisième corps d'évaporateur (221). Le courant (233) est envoyé en amont d'un second éjecto-compresseur (234), pour être mélangé au courant de vapeur haute pression arrivant en (222).

Il sort en (235) de l'éjecto-compresseur (234) une vapeur à température et pression abaissées, qui est introduite dans le blancheur (202) en vue du réchauffage de la matière végétale (201).

Le troisième corps d'évaporateur (221) fournit aussi des condensats (236) qui sont ajoutés dans la canalisation (229). Ces condensats combinés circulent dans la canalisation (237) pour être utilisés en vue du chauffage de l'air dans l'unité de séchage (212) ainsi qu'il sera décrit plus loin. Il sort du troisième corps d'évaporateur (221), d'une part un effluent gazeux (vapeur d'eau) par la ligne (238) et, d'autre part, un jus concentré ou sérum qui, par la canalisation (239) peut être introduit dans le parcours (210) de la matière fibreuse humide, pour être séché conjointement à celle-ci dans l'unité de séchage (212).

Dans l'exemple illustratif représenté au dessin, cette unité de séchage (212) comprend trois aérothermes (243, 244,245). L'air à température ambiante est introduit en (242) dans le premier aérotherme (243). L'air entrant est préchauffé par les condensats chauds introduits en (246) dans l'aérotherme (243). Ces condensats sont obtenus en combinant les condensats provenant en (237) de l'évaporateur (211) et les condensats sortant en (249) de l'aérotherme (245). Le deuxième aérotherme (244) est chauffé par de la vapeur basse pression (248) provenant d'un troisième éjecto-compresseur (241). Celui-ci est alimenté d'une part par la vapeur (238) provenant du troisième corps d'évaporateur (221) et, d'autre part, par un courant (240) de vapeur haute pression disponible à partir de la ligne (215). A la sortie de l'aérotherme (244) on dispose en (251) de condensats refroidis qui se joignent à ceux provenant de l'aérotherme (243) pour fournir un courant (247).

L'aérotherme (245) est alimenté par le reste de la vapeur haute pression disponible qui circule dans la ligne (250). On dispose ainsi en (252) d'air chaud, capable d'être introduit dans un sécheur (253), par exemple un sécheur à tapis, dans lequel la matière fibreuse humide (210) est séchée.

La matière végétale séchée sort du procédé en (254) et peut être soumise à d'autres opérations (non représentées) par exemple de broyage et granulation.

Le procédé décrit en référence à la Fig. 3, a été mis en oeuvre pour la déshydratation de luzerne fraiche ayant une teneur en humidité de 82 %. On disposait d'une vapeur sèche à $18.10^5$Pa provenant d'une centrale électro-nucléaire.

19

On a traité un tonnage de luzerne de 64 tonnes, qui a été introduit en (201) dans le procédé. Les essais ont montré qu'il fallait utiliser 35 tonnes de vapeur à 206° sous $18.10^5 Pa$, pour amener à 15 % la teneur en humidité de la luzerne.

Dans l'évaporateur ou concentrateur (211) on a eu besoin de 11,5 tonnes de vapeur vive provenant du courant (216). La quantité de vapeur circulant dans le courant (222) était égale à 4,8 tonnes. Ce courant a été introduit en amont de l'éjecto-compresseur (234) en même temps que 3,2 tonnes de vapeur basse pression à 80°C circulant dans la ligne (233) et provenant du deuxième corps d'évaporateur (220). On a ainsi disposé à la sortie de l'éjecto-compresseur (234) d'une quantité de vapeur basse pression de 8 tonnes à une température de 102°C qui a pu être acheminée par la ligne (235) vers le blancheur (202).

A la sortie du tamis (206) on a obtenu dans la ligne (207) 49 tonnes de jus liquide. Aux 23 tonnes de matière fibreuse humide s'ajoutent 5,9 tonnes de sérum concentré provenant de la ligne (239), ce qui constitue au total 28,9 tonnes de produit soumis au séchage dans l'unité (212), plus particulièrement dans le sécheur à tapis (253).

Les besoins calorifiques de l'évaporateur ou concentrateur (211) sont satisfaits par les 23 tonnes de vapeur à 104° circulant dans la ligne (218) et provenant de l'éjecto-compresseur (217). Ce dernier reçoit, comme on l'a vu précédemment, 11,5 tonnes de vapeur vive par la ligne (216) et un complément de 11,5 tonnes de vapeur basse pression à 90° recyclées dans la ligne (226) en provenance du premier corps (219) d'évaporateur.

Dans le premier corps d'évaporateur (219),une quantité d'eau de 23,2 tonnes est évaporée. L'effluent sort par la ligne (223) et fournit d'une part les 11,5 tonnes de la ligne (226) qui sont recyclées à l'éjecto-compresseur (217) et, d'autre part, les 11,7 tonnes de vapeur de la ligne (227) qui servent à alimenter le deuxième corps d'évaporateur (220).

Dans le deuxième corps d'évaporateur (220), une quantité d'eau de 11,5 tonnes est évaporée. L'effluent sort par la ligne (230) et est subdivisé en 3,2 tonnes à 80°C de la ligne (233) qui sont utilisées dans l'éjecto-compresseur (234) et en 8,3 tonnes de la ligne (232), qui servent à l'alimentation du troisième corps d'évaporateur (221).

Dans le troisième corps d'évaporateur (221), une quantité totale d'eau de 8,4 tonnes est évaporée et se trouve ainsi utilisable dans la ligne (238) pour l'alimentation de l'éjecto-compresseur (231). La vapeur de la ligne (238) est une vapeur basse pression qui se trouve à une température voisine de 64,5°C. L'éjecto-compresseur (241) reçoit par la ligne (240) 3,9 tonnes de vapeur vive, ce qui permet d'obtenir à la sortie dudit éjecteur (241), dans la ligne (248) 12,3 tonnes de vapeur à 75°C.

L'évaporateur ou concentrateur (211) fournit encore 41 tonnes de condensats chauds, à une température voisine de 80°C, qui sont disponibles dans la ligne (237).

Dans l'unité de séchage (212), on introduit par la ligne (242) 800.000 kgs d'air à 15°, qui sont préchauffés dans l'aérotherme (243) par les condensats de la ligne (237) et les condensats de la ligne (249) qui sont combinés dans la ligne (246). Il sort du premier aérotherme (243) un condensat refroidi à 40° qui est disponible dans la ligne (247). L'air préchauffé dans l'aérotherme (243) jusqu'à une température voisine de 27° est introduit dans l'aérotherme (244). Ce dernier reçoit comme fluide calorifique, la vapeur basse pression de la ligne (248). L'air est ainsi réchauffé jusqu'à une température voisine de 64° et passe dans l'aérotherme (245). Celui-ci reçoit 14,8 tonnes de vapeur vive disponibles dans la ligne (250). L'air chaud sort à 110°C dans la ligne (252) pour être introduit dans le sécheur à tapis (253) dans lequel 15,35 tonnes d'eau sont évaporées.

On obtient à la sortie du procédé, dans la ligne (254) 13,55 tonnes de luzerne séchée qui peut être convertie ultérieurement,de manière classique,par broyage et granulation.

La consommation totale de l'unité de séchage (212) est de 1.100 Kcl par kg d'eau pour 15,35 tonnes d'évaporation horaire.

Ainsi, malgré l'introduction de 8 tonnes de vapeur dans la luzerne au sein du blancheur (202), la consommation totale de vapeur haute pression est seulement de 35 tonnes. La luzerne séchée sort en (254) à 11 % d'humidité.

La consommation spécifique globale est donc de 460 Kcal par kg d'eau. Cette consommation est approximativement la moitié de celle qui serait entraînée par le séchage intégral de la même masse sur tapis avec de l'air chauffé avec la même vapeur.

Enfin, on doit noter que l'installation pour la mise en oeuvre du procédé de l'invention représente un investissement moins élevé que celui d'un tapis de séchage à basse température d'une capacité équivalente.

Le procédé représenté aux dessins annexés correspond au rendement énergétique optimal. Il va sans dire qu'on peut apporter à ce procédé un certain nombre de variantes, sans pour autant sortir du cadre de l'invention. Ainsi, il n'est nullement obligatoire d'utiliser une unité de séchage à trois étages. La circulation des fluides, telle qu'elle est représentée, fournit le meilleur rendement calorifique. Toutefois, pour certains besoins pratiques, il peut ne pas être nécessaire de tirer partie de la chaleur disponible dans les condensats chauds sortant des différents corps de l'évaporateur.

Egalement, on n'a pas représenté aux dessins certains aménagements qui consistent à injecter de faibles quantités de condensats au niveau du ou des éjecto-compresseurs.

REVENDICATIONS

1/ Procédé pour le séchage de matières végétales dans lequel on soumet la matière végétale à traiter (1) à un chauffage (2), suivi d'un pressage (4), qui fournit un liquide de pressage (5,7) et une matière pressée humide (9,10), lesquels sont tous deux séchés, ledit procédé étant caractérisé en ce qu'on utilise de la vapeur haute pression (13) comme fluide disponible,

a/ en introduisant une première quantité de ladite vapeur disponible (13) dans un étage d'évaporation (11) destiné à sécher le liquide de pressage (5,7), cette première quantité de vapeur (18) étant introduite dans l'étage d'évaporation (11) après passage dans un éjecto-compresseur (16), l'effluent gazeux (23) provenant de l'étage d'évaporation (11) étant partiellement recyclé vers ledit éjecto-compresseur (16),

b/ en introduisant une partie (19) de la vapeur basse pression sortant dudit éjecto-compresseur (16) dans l'étage de chauffage (2) avant pressage (4) de la matière végétale (1),

c/ en utilisant dans une unité de séchage (12) de ladite matière pressée humide (10) le reste (15) de ladite vapeur disponible (13) et le reste (22) de l'effluent gazeux (21) de l'évaporateur.

2/ Procédé selon la revendication 1, caractérisé en ce qu'on utilise de la vapeur haute pression (113) comme fluide disponible,

a/ en introduisant une première quantité (116) de ladite vapeur disponible (113) dans un étage d'évaporation (111) destiné à sécher le liquide de pressage (105,107), cette première quantité de vapeur (116) étant introduite dans l'étage d'évaporation (111) après passage dans un premier éjecto-compresseur (117), l'effluent gazeux (123) provenant de l'étage d'évaporation (111) étant partiellement recyclé (126) vers ledit premier éjecto-compresseur (117),

b/ en introduisant une seconde quantité (135) de ladite vapeur disponible après passage dans un second éjecto-compresseur (134) dans l'étage de chauffage (102) avant pressage (104) de la matière végétale (101), l'effluent gazeux (130) provenant de l'étage d'évaporation (111) étant partiellement recyclé (133) vers ledit second éjecto-compresseur (134),

c/ en utilisant dans une unité de séchage (112) de ladite matière pressée humide (110), le reste (115) de ladite vapeur disponible (113) et le reste (132) de l'effluent gazeux (130) de l'évaporateur (111).

3/ Procédé selon la revendication 1, caractérisé en ce qu'on utilise de la vapeur haute pression (213) comme fluide disponible,

a/ en introduisant une première quantité (216) de ladite vapeur disponible (213) dans un étage d'évaporation (211) destiné à sécher le liquide de pressage (205,207), cette première quantité de vapeur (216) étant introduite dans l'étage d'évaporation (211) après passage dans un premier éjecto-compresseur (217), l'effluent gazeux (226) provenant de l'étage d'évaporation étant partiellement recyclé vers ledit premier éjecto-compresseur (217),

b/ en introduisant une seconde quantité (235) de ladite vapeur disponible après passage dans un second éjecto-compresseur (234) dans l'étage de chauffage (202) avant pressage (204) de la matière végétale (201),l'effluent gazeux (233) provenant de l'étage d'évaporation (211) étant partiellement recyclé vers ledit second éjecto-compresseur (234),

c/ en introduisant une troisième quantité (240) de ladite vapeur disponible (213) avec le reste (238) de l'effluent gazeux de l'étage d'évaporation (211), dans un troisième éjecto-compresseur (241), la vapeur (248) sortant de ce dernier étant utilisée avec le reste (250) de ladite vapeur disponible (213) dans une unité de séchage (212) de la matière pressée humide (210).

4/ Procédé selon l'une quelconque des revendications 1 à 3, caractérisé en ce que, à titre de matière végétale, on utilise des plantes ou des parties de plantes, essentiellement les parties aériennes de celles-ci, telles que les feuilles et les tiges non lignifiées, et de préférence des végétaux feuillus, par exemple des fourrages tels
que la luzerne.

5/ Procédé selon l'une quelconque des revendications 1 à 4, caractérisé en ce que, à titre de vapeur haute
pression (ou vapeur vive) on utilise une vapeur d'eau disponible sous une pression au moins égale à $5.10^5$Pa et pouvant
aller jusqu'à des valeurs de $18.10^5$Pa, la gamme préférée se
situant entre $10.10^5$Pa et $15.10^5$Pa.

6/ Procédé selon la revendication 5, caractérisé
en ce qu'on utilise une vapeur d'origine géothermique ou
celle provenant des centrales de chauffage urbain par chaudières à incinération d'ordures, ou celle de la production
thermo-nucléaire.

7/ Procédé selon la revendication 1, caractérisé
en ce qu'on utilise un étage d'évaporation (11) comportant un
seul effet, ou corps (20) et fonctionnant sous vide.

8/ Procédé selon la revendication 2, caractérisé
en ce qu'on utilise un étage d'évaporation (111) à deux effets ou corps (119,120) et fonctionnant sous vide.

9/ Procédé selon la revendication 3, caractérisé
en ce qu'on utilise un étage d'évaporation (211) comportant
trois effets ou corps (219,220,221) et fonctionnant sous
vide.

10/ Procédé selon l'une quelconque des revendications 1 à 9, caractérisé en ce qu'une partie (23,126,226)
de l'effluent gazeux provenant de l'étage d'évaporation
(11,111,211) avantageusement celle qui provient du premier
(119,219) ou de l'unique (20) effet de l'évaporateur, est
recyclée en amont du premier éjecto-compresseur (16,117,217)
pour être mélangée avec la première quantité (14,116,216) de
vapeur disponible.

11/ Procédé selon l'une quelconque des revendications 2 à 10, caractérisé en ce qu'une partie (133,233) de
l'effluent gazeux provenant de l'étage d'évaporation (111,
211) est recyclée dans le second éjecto-compresseur (134,
234), de manière à être mélangée à la seconde quantité de
vapeur (122,222) pour être utilisée (135,235) dans le réchauffage (102,202) de la matière végétale (101,201).

12/ Procédé selon l'une quelconque des revendications 3 à 11, caractérisé en ce qu'on combine une troisième quantité (240) de vapeur disponible avec le reste (238) de l'effluent gazeux de l'étage d'évaporation (211) pour introduire ces flux combinés dans un troisième éjecto-compresseur (241) dont la vapeur sortante (248) est utilisée dans l'unité de séchage (212).

13/ Procédé selon l'une quelconque des revendications 1 à 12, caractérisé en ce que pour le séchage on utilise un sécheur à tapis (31,153,253) sur lequel circule la matière (10,110,210) à sécher.

14/ Procédé selon l'une quelconque des revendications 1 à 13, caractérisé en ce que le fluide de séchage (42,142,242) est de l'air qui est préchauffé dans des appareils classiques du type aérotherme, de préférence dans une batterie d'aérothermes en série, par exemple trois aérothermes (25,26,27, respectivement 143,144,145, respectivement 243,244,245).

15/ Procédé selon la revendication 14, caractérisé en ce que l'air (42,142,242) de l'unité de séchage (12, 112,212) est préchauffé additionnellement par introduction dans un moins un aérotherme (25,143,243) des condensats (36,146,246) résultant de la combinaison des condensats (24,129,237) provenant de l'étage d'évaporation et des condensats (29,148,249) provenant de la batterie d'aérothermes.

16/ Procédé selon l'une quelconque des revendications 1 à 15, caractérisé en ce qu'on prélève une partie des condensats provenant de l'étage d'évaporation (11,111,211) pour l'injecter au niveau du ou des éjecto-compresseur(s) (16, respectivement 116,134, respectivement 217,234,241) pour réaliser une désurchauffe des fluides gazeux circulant dans ces appareils.

17/ Procédé selon l'une quelconque des revendications 1 à 16, caractérisé en ce qu'on sèche de la luzerne.

FIG.1

1/3

0251936

FIG.2

2/3

0251936

FIG.3

3/3

0251936

European Patent
Office

**EUROPEAN SEARCH REPORT**

Application number

EP 87 40 1558

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 294 648 (FRANCE LUZERNE) * Page 4, line 26 - page 5, line 24; figures * | 1 | F 26 B 1/00 F 26 B 7/00 A 23 K 3/02 |
| | --- | | |
| A | FR-A-2 530 929 (BEGHIN-SAY) | | |
| | --- | | |
| A | FR-A-2 473 271 (AGROPROTEINE IND.) | | |
| | --- | | |
| A | FR-A-2 302 048 (FRANCE LUZERNE) | | |
| | ----- | | |

TECHNICAL FIELDS
SEARCHED (Int. Cl.4)

F 26 B
A 23 K

The present search report has been drawn up for all claims

| Place of search | Date of completion of the search | Examiner |
|---|---|---|
| THE HAGUE | 08-10-1987 | PESCHEL G. |